# EUROPEAN PATENT APPLICATION

(11) **EP 3 352 095 A1**
(43) Date of publication of application: **25.07.2018**
(21) Application number: 17152795.5
(22) Date of filing: 24.01.2017
(51) Int. Cl.: G06F 17/30

(54) **DYNAMIC HIERARCHICAL DATA SYSTEM**

(71) Applicant: FUJITSU LIMITED, Kawasaki-shi Kanagawa 211-8588 (JP)
(72) Inventor: MENDAY, Roger, Guildford, Surrey GU1 1YB (GB)
(74) Representative: Fenlon, Christine Lesley

(57) **Abstract**

In usual operation, the storage functions that file systems offer to applications are passive, adhoc and without constraints. Application logic manages the structures of the file system from an upper architectural layer. The present invention extends the usual expectations of the file system by adding the ability for it to act in a more dynamic, proactive and domain-specific manner. This includes autonomously creating new content and structure to support domain specific requirements. Software agents (400) monitor structural changes to the file system (S12), look for a configuration file matching certain structural changes (S14) and modify the file system (S16), for example by responding to a directory creation command by creating additional sub-directories.

## Description

### Field of the Invention

The present invention is in the field of hierarchical data systems such as file systems used to manage data in a computer system, particularly but not exclusively a large-scale computer system.

### Background of the Invention

The concept of "data tiers" is widely used in software engineering. A multi-tier architecture is a client-server architecture in which presentation, application processing, and data management functions are physically separated. Whilst an n-tier architecture can be considered in general, the commonest architecture is the three-tier architecture. A three-tier architecture is typically composed of a presentation tier, a logic or processing tier, and a data storage tier.

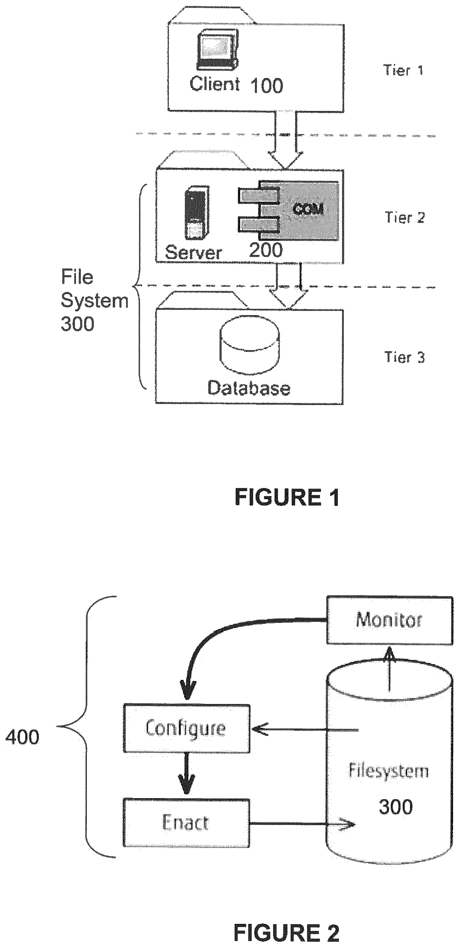

Figure 1 shows such a three-tier architecture in simplified form. Although it may be helpful to regard the respective tiers as being implemented on different hardware (as indicated in Figure 1), this is not essential.

In this example, Tier 1 is a topmost, Client tier including the user interface of an application, which may run on a desktop PC or workstation indicated by Client 100 in Figure 1, and which may use a standard graphical user interface. This tier supplies data (such as queries) to the Middle tier, Tier 2 (also referred to as the Logic tier). This contains functional process logic that may consist of one or more separate modules running on a workstation or application server (denoted by Server 200 in Figure 1), in order to provide the functionality of the application.

Tier 3 is a Data tier which receives queries from the higher tiers, and this may be implemented on a database server or mainframe that contains the computer data storage logic, schematically indicated by Database in Figure 1. The Data tier includes the physical storage for data referred to by the application, and database management system software that manages and provides access to the data.

Tiers 2 and 3 are managed by using an abstraction of the physical storage, known as a "file system" 300. The file system 300 stores so-called "metadata" of the actual files including file name, length, date of creation and so forth, and location of the file in a hierarchy (see below). The metadata is stored separately from the actual data of the file. In this way the higher tiers (including any human users) need not be concerned with the details of how the data is actually stored, and need only deal with the file system. Such a file system is one example of a hierarchical data system referred to below.

The physical storage for the data may be distributed over one or more nodes of a network remote from the higher tiers, in which case the file system is referred to as a network file system or distributed file system. Such a system can be transparent to clients (applications or human users) in that the files can be accessed in just the same way as local files, using the same Application Program Interfaces (APIs) and semantics. As just mentioned, a file system may be regarded as an abstraction from physical data storage, but a "virtual file system" takes this concept one stage further by, for example, unifying a local and network file system into a single entity. References henceforth to "file system" include all of these kinds of file system.

APIs may exist between respective tiers, each API being a specification by which the software in different tiers interact with each other. Thus, a request or data operation originating from Tier 1 would be given an API wrapper that converts the request to the format of queries understandable to the Tier 3 file system.

The file system 300 consists of files and folders (also known as directories: the two terms are used synonymously from now on). A folder can be defined as a file system cataloguing structure having references to files and/or other directories. Typically, related files are stored in the same directory, and directories are arranged in multiple levels in a tree-like structure - such a file system is called a hierarchical filesystem. More precisely the structure is that of an upside-down tree, since the top-level directory in such a filesystem is called the root directory. A second directory within a first directory is called a subdirectory, and this subdirectory is said to be a "descendant" of the first directory or of any other upper-level directory that contains it. Conversely, the first directory may be referred to as the "parent" of the second, sub-directory, and the first and any higher-level directories are also called "ancestors" of the second directory. "Sibling" nodes share the same parent node. A user (or application) navigates to a specific directory by inputting commands to the file system. A directory currently being considered (i.e., in which the user or application is "located" for the purposes of data manipulations) is referred to as the "context directory" or "working directory".

Inputs to the file system 300 follow so-called "semantics" which define the kinds of operation which can be commanded, and the results thereof. Thus, "file system semantics" include the set of commands understood by the file system such as change directory, create, store, retrieve and so on. Such commands (also known as "directives") are defined as part of an operating system such as Linux used to manage the file system. The types of data (or "domain") recognised by the file system, and allowed to be stored in a file or folder may be defined by "domain constraints".

One example of a file system is the Linux file system (or more correctly, any of the various file systems understood by Linux such as ext2, ext 3, ext 4 or reiserfs), which follows the above mentioned tree-like structure. Relevant commands in Linux include mkdir to create a new directory, cd to change the context directory, and tree to list the list contents of directories in tree-like format. Another command provided in Linux, chroot, changes the apparent root directory to prevent access to other parts of the directory tree. Hidden files in the Linux file system are denoted by an initial period (.). Linux provides a tool called **inotify** to monitor changes to the filesystem, and report those changes to applications. inotify can be used to watch specified directories or files and report any of specified events including open, close, move/rename, delete, create or change attributes. Another mechanism available in Linux, "Filesystem in Userspace" or FUSE, allows application code to construct and interface with a virtual file system. For example, FUSE has been used to develop the virtual file system GmailFS, in which a Gmail account is used for storage.

Referring again to Figure 1, the Client tier might employ web development tools such as HTML, CSS and Java Script to provide a web-based interface, and a mobile platform like iOS or Android for a mobile interface. The Logic tier might employ Ruby on Rails, Java, .NET, or one of the many other platforms available. The file system may comprise databases of different kinds such as relational databases, operational databases, end-user databases, distributed databases, and analytical databases.

Ruby-on-Rails (and similar) Web application frameworks are a reaction to the overhead of excessive boilerplate in web applications. These are rapid application development environments preferring "convention-over-configuration", in an architecture where there is a relational database backend. Convention over configuration means defaulting to a set of conventions, rather than expecting the developer to specify the configuration in minute detail, thereby reducing the amount of code which the developer has to write. Similar motivations are in the background of the invention to be described. The modern enterprise is a polyglot of everything. In this environment where there is huge variation, the file system mechanism offers a consistent layer of interoperability and flexibility. It would be desirable to leverage the universality of access that file systems offer, but change their passive nature.

More generally existing file systems have drawbacks including the following:
The file system is passive - for some applications it would be advantageous to introduce dynamism.
Ad-hoc structuring - structural changes, especially when the file system is shared, quickly lead to messiness.
The file system is "dumb"; it merely presents a blank canvas, with no guidance ('signposts') for future progress.

### Summary of the Invention

As noted, the file system mechanism offers a consistent layer of interoperability and flexibility. Embodiments of the present invention leverage the universality of access that file systems offer, but change its passive nature, to obtain a file system which is dynamic in the sense that the file system reacts proactively to certain inputs, more particularly to structural changes such as creation of a directory or file. The file system may react for example by creating at least one additional directory or file, and/or by restricting access to a certain directory or directories. Such effects are referred to below as "manipulations". In other words the file system semantics are extended from those of a "dumb" store and retrieve mechanism to include structural constraints, and dynamic responses. This can provide productivity enhancements to application developers. Moreover, the same principle can be applied to other kinds of hierarchical data system apart from a file system.

According to a first aspect of the present invention, there is provided a hierarchical data system comprising one or more agents arranged to monitor structural changes to the hierarchical data system, to recognise at least one specific structural change and in response to said specific structural change, to apply one or more manipulations of the hierarchical data system not specified by said structural change.

Here, the "agents" may be implemented in software form either as part of the hierarchical data system or accessible to the hierarchical data system. The "structural changes", as explained below, refer to certain events occurring in the hierarchical data system as a result of user input (where "user" can include an application program), causing some change in the structure of the hierarchical data system. The "manipulations" refer to actions performed autonomously in response to the structural changes without specific command of those actions by the user.

Preferably the hierarchical data system defines paths, and the one or more agents compare structural changes with at least one path template and on finding a match of the structural change with part of a template, apply said one or more manipulations in accordance with the remainder of the template.

Here, the template may be contained in a configuration file of the hierarchical data system.

In one embodiment the hierarchical data system includes a hierarchical structure of directories. In this embodiment, preferably, the agents are responsive to a structural change to search the context directory and any ancestor directories for a said configuration file matching the structural change.

In such a search, preferably, the agents search the context directory first and if the configuration file is not found, proceed to search progressively higher levels in the hierarchical structure. In this way the configuration file can be provided at a level within the hierarchical data system which provides the desired amount of generality to the one or more manipulations.

The specific structural change to which agents are responsive may include a create directory command.

The one or more manipulations applied by agents may include creating at least one sub-directory of said directory. Other possible manipulations include creating at least one file within said directory. This can save work for the user (or application) which caused the change, as well as enforcing a consistent structure on all users.

In any hierarchical data system as defined above, preferably the one or more manipulations enforce domain-specific structures in a file system. For example, subsequent input of data may be restricted to specific types of data and to specific subdirectories.

The one or more manipulations may constrain data entry into a file system. For example access to one or more directories may be restricted.

According to a second aspect of the present invention, there is provided a method of managing a hierarchical data system comprising:
monitoring structural changes to the hierarchical data system in order to recognise at least one specific structural change; and
in response to recognising the specific structural change, applying one or more manipulations of the hierarchical data system not specified by said structural change.

According to a third aspect of the present invention, there is provided a computer program which, when executed by a computing apparatus, causes the computing apparatus to perform the above-defined method. Such a program may be stored on one or more non-transitory computer-readable recording media.

The above mentioned method and program may share any of the features defined with respect to the hierarchical data system of the invention.

Thus, embodiments of the present invention provide a mechanism of reactivity that is encoded as instructions/configuration into a hierarchical data system, such that during operation it can be utilized by agents in response to the structural changes initiated by users and/or applications, to further manipulate the hierarchical data system autonomously on behalf of the user and/or administrator. In other words the hierarchical data system performs reactive or proactive manipulations over and above a structural change explicitly commanded by the user/administrator. This continuous adjustment to the nature of the hierarchical data system provides enhanced support to users because the hierarchical data system embeds semantics of the application itself.

In usual operation, the storage functions that hierarchical data systems offer to applications are passive, adhoc and without constraints. Application logic manages the structures of the hierarchical data system from an upper architectural layer. The present invention may extend the usual expectations of the hierarchical data system by adding the ability for it to act in a more dynamic, proactive and domain-specific manner. This includes manipulating the hierarchical data system to autonomously create new content and structure to support domain specific requirements. This invention is intended to be realised as a component inside a complete system.

### Brief Description of the Drawings

Figure 1 is a schematic diagram of a multi-tier architecture;
Figure 2 shows a principle of operation of embodiments of the present invention;
Figure 3 is a flowchart of operation of an "agent" employed in an embodiment; and
Figure 4 illustrates a computer system suitable for implementing an embodiment of the present invention.

### Detailed Description

This invention provides a mechanism to introduce dynamism in the operation of a hierarchical data system which may be, but is not restricted to, a file system. That is, although a file system is used to store data having some enduring existence, this is not essential to the present invention, which can also be applied to transitory data. Below, the term "file system" is used for convenience, and the Linux file system will be mentioned by way of example.

As already mentioned existing file systems have limitations, and there are some scenarios in which some additional dynamic possibilities would be useful, whereby the file system reacts automatically to certain input in ways not directly implied by the input. The kinds of input of interest are those having some effect on the structure of the file system, and are referred to as "structural changes". For example, when users of the file system use the 'file explorer' application (or command line) to add a directory, it is possible to positively enhance the user experience by creating additional structural artefacts according to some domain model and knowledge structure. These additional structural artefacts include, but are not limited to, folders and files. Such creation of structural artefacts is one example of "manipulations" of the file system. In the embodiment to be described, the created folders/files are descendant folders/files of a structure created by the user input, but the present invention is not limited to this. It would be possible to introduce other directives, in which more elaborate consequences may be possible. For example, the present invention might make changes to other points in the tree (e.g. to sibling nodes).

This innovation is an element of a distinctive architecture that can be used to rapidly build file system based dynamic knowledge management applications. It is based on a readjustment of the 3-tier architecture from which it is possible to gain additional benefits and efficiency improvements for important use-cases. In this re-adjustment, the perspective of the application developer can shift from traditional notions of application and interface layers, and on to data-oriented view of the middle tier where reoccurring interaction patterns are encoded in the middleware and APIs, such that application developers only need to take care of domain specific processing. This mechanism also enforces a certain style of development (including how and where state is kept) which is advantageous for scalable and resilient applications.

The specific innovation here presented takes influence from a number of sources, e.g. event based programming, and of course file system design. There is a wide availability of tools (and 'hacks') for operating systems and file systems. This includes virtual file systems (i.e. FUSE), file system events (i.e. inotify), distributed file systems, etc. Virtual file systems have been deployed to provide a file system interface to a wide variety of underlying systems, e.g. GmailFS exposes gmail resources as a virtual file system. File system events (such as inotify on Linux) are commonly used by developers to automate compilation tasks, etc.

The innovation presented here is a unique capability that extends usual file system semantics, and when triggered by file system interactions uses several mechanisms to dynamically manipulate the file system.

The principle of the invention is shown in Figure 2. A hierarchical data system, in this case a file system 300, has instructions/configuration into the file system placed into it in advance by administrators. The file system 300 is monitored by one or more monitoring and reaction agents 400 in the form of software executed by one or more processors, henceforth referred to simply as "agents". Multiple agents (multiple software modules) may be provided to monitor respective parts or hierarchical levels of a file system, or there may be a single multi-threaded agent monitoring the whole system. As indicated by "Monitor" in the Figure, the agent 400 watches for activity in the file system 300. If monitoring detects an event which matches a predetermined template, the agent extracts a configuration file (as indicated by "Configure" in Fig. 2). This causes some additional behaviour to be enacted by the agent 400 (as shown by "Enact" in the Figure).

Thus, the agent(s) need to be able to retrieve instructions from the file system. The chosen naming convention used by a specific instance should be clearly identified, but this example embodiment uses hidden files named '.config'.

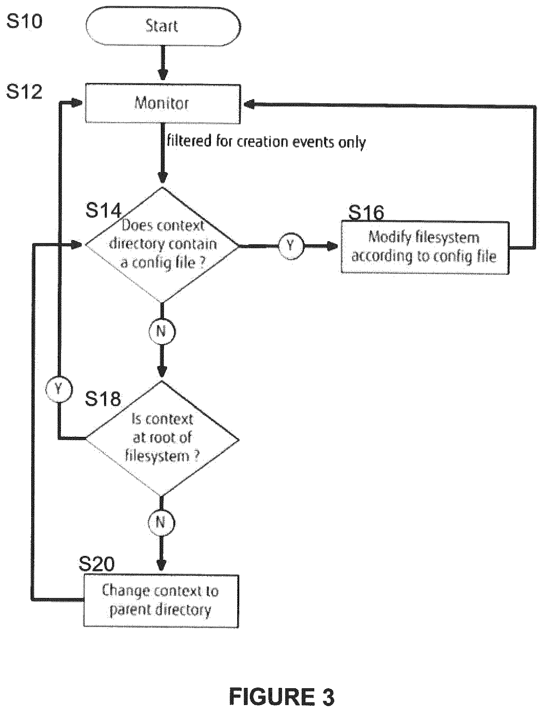

Figure 3 is a flowchart of operations performed by the agent 400. The process starts at S10. In step S12, the agent 400 monitors activity in the file system 300 (file system events). The agent watches for structural changes to the file system. In particular, the agent is looking for creation events, including (but not necessarily limited to) when a user places new content in a directory. In the case of a Linux file system for example, step S12 may employ the above mentioned inotify function. This provides a stream of file system events that can be filtered (for example by limiting them to "create directory" events) and used to initiate the next step in the process. As an alternative, future mechanisms could create new file system software where the monitoring capability can be directly integrated.

Detection of a file creation event causes the agent to examine the context directory for the above mentioned .config file. A discovery algorithm encoded in the agent determines where to look for the configuration. First, in step S14 the agent looks into the context directory, i.e. the directory where the activity took place for the configuration file (by default '.config'). A positively located configuration file (S14, "Y") contains directives which can be used to perform post-processing. In step S16, the agent uses that configuration to establish the additional file system manipulation, after which monitoring resumes in S12.

If this file is not present (S14, "N") the flow proceeds to step S18 where the agent checks whether the context directory is at the root of the file system 300. If so (S18, "Y") there is no higher level in the tree to be examined, and the flow returns to S12. On the other hand, if the context directory is not yet at root level (S18, "N") then the agent changes the context to the parent directory and repeats S14. In this way the agent navigates the ancestors in the tree, looking for the same file.

Thus, file system agents manipulate the file system on behalf of its administrator using the directives from the discovered configuration (the directives being commands already available in the OS used). This may involve an additional filtering or matching process first. For example this might include the ability to use wildcards to provide some more fine grained filtering.

A specific example will now be described to illustrate the process more concretely. However, it is to be understood that the present invention is not limited to the following example.

The scenario of information management of patients in a hospital is used as an example. Suppose that the hospital would like to use a file system as a simple management tool for Patients. When empty, a patient directory looks as follows:

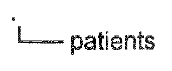

It may be expected that the file system will include a directory for each patient, and that a Web application (web or http-based API) will be used to access the hospital database in order to add the required information. A typical construct might be to use each new directory inside /patients to represent a new patient in the system. For example, a directory called 'john.smith' results in the following structure: 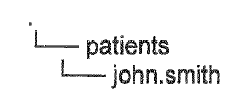 However with the present embodiment activated, additional structure (e.g. one or more directories) is created to act as placeholders for additional content in the future. For example, the result will be the following: 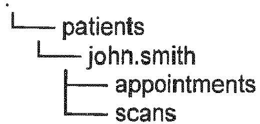 Thus, the agent of the present embodiment has detected the input of a mkdir command in respect of 'john.smith' and automatically created 'appointments' and 'scans' directories. These act as new signposts to help steer how users interact with the file system. That is, when the user comes to add fresh information to the database, the file system aids this process by having already created automatically the appropriate supporting structure.

Thus, the file system is made "dynamic" in that the creation of a directory for a patient automatically triggers the creation of the two new subdirectories, which are containers into which additional information about the patient can be placed.

This is achieved by the administrator, in advance, encoding directions into the file system to be used by file system agents. In this example, a hidden file is inserted in the directory receiving the new insertion. In specific name of the file should be configurable in the agent software, but, in the case of this example it is called ".config". 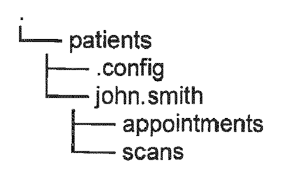 Corresponding to the above, the session at the command line in a Unix terminal presents the following to the user, where $ is the Unix terminal prompt: 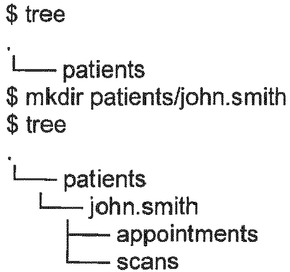 The content of the .config file is:

```
{}
appointements
scans
```

In this way, the .config file instructs how new subdirectories of "appointments" and "scans" should be created. This simple format instructs the processing agent of the nature of the structural entities that may be inserted. These two directory names are evaluated in the context of the created entity, i.e. at the current level in the directory tree.

As an alternative it may be wished to define the application in one place at the head of the file system:-

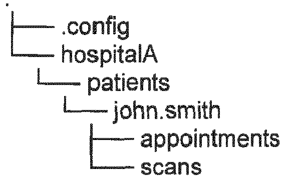

In this case, when the new patient is created in the /patients directory, the absence of the local configuration initiates the ascent of the directory tree to find the appropriate configuration. In this example, it is found at the root of the file system.

The content of the .config file is:

```
$
{}
patients
{}
appointments
scans
```

This is an sample of the configuration in one embodiment. The indents are significant, and represent the hierarchy of the file system. The $ represents the root of the file system. The {} notation is a wildcard for any matching string.
If the context path:

```
$
hospitalA
patients
john.smith
```

matches the stem of one of the path templates then the remainder of the template can be consulted to derive the necessary changes that should be made to the file system; in this case 'appointments' and 'scans'. In other words the agent checks to see whether a config file is applicable to a directory that has just been created. The config file consists of a number of path templates. When the newly created entity matches one of the path templates, this can be followed by looking at the rest of the template.

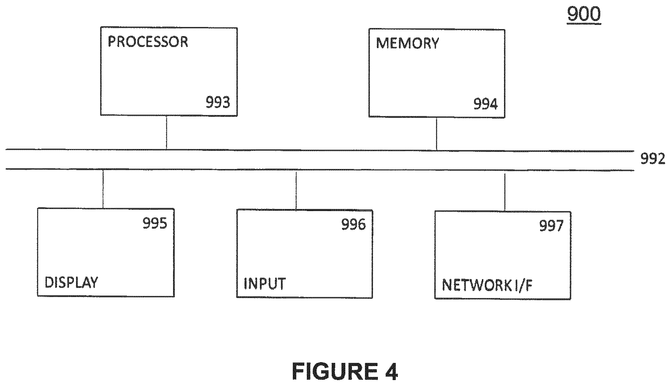

Figure 4 is a block diagram of a computing device 900, such as a data storage server, which embodies the present invention, and which may be used to implement a method of the invention. The computing device comprises a processor 993, and memory, 994. Optionally, the computing device also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more of the functions or operations as described above, including the above mentioned "agents". Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CDROM) or other optical disk storage, magnetic disk storage or other magnetic storage devices, flash memory devices (e.g., solid state memory devices).

The processor 993 is configured to control the computing device and execute processing operations, for example executing code stored in the memory to implement the operations of the "agents" described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device, for example commands intended for the filesystem.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Thus, methods embodying the present invention may be carried out on a computing device such as that illustrated in Figure 4. Such a computing device need not have every component illustrated in Figure 4, and may be composed of a subset of those components. A method embodying the present invention may be carried out by a single computing device in communication with a file system via a network. The computing device may be part of the file system itself (or more generally, part of a hierarchical data system).

Thus to summarise, embodiments of the present invention encode instructions/configuration into the file system such that during operation it can be utilized by software agents to respond to structural changes input from outside, and further manipulate the file system automatically on behalf of the user and/or administrator. This continuous adjustment to the nature of the file system provides enhanced support to users because the file system embeds semantics of the application itself.

Various modifications are possible within the scope of the invention.

In the above embodiment, the agents create additional directories. However, the agent behaviour is not limited to this and can include (in addition to, or instead of creating one or more directories) creation of new content and/or structure such as files, and creating a directory or file having a special interpretation or behaviour. The agent behaviour may also include restricting access to certain directories, for example using chroot or a similar function.

Reference has been made above to Linux. However, embodiments of the present invention can be applied to any kind of operating system and to any filesystem associated with an operating system. Examples include the Apple Mac OS including its Hierarchical File System (HFS), Microsoft Windows with New Technology File System (NTFS), and OpenVMS with Files-11 virtual filesystem. More generally, the present invention may be applied to any hierarchical data system employing hierarchical structures such as files and folders, and also to structures based on Uniform Resource Identifiers (URIs).

In this connection, it is noted that such a system need not store data and might be, for example, a look up mechanism. For example, the hierarchical data system may be a virtualised abstraction used to make it easier to manage transitions from local resources to the Cloud where the storage is remotely accessible. The operation of the hierarchical data system may be surrounded with processes which can be triggered at all points around an interaction (pre, during, after), and may also have go/no-go pre-checks too. This should happen when new entities are created, but, also for deletion, append, etc.

The present invention may form part of a larger architecture, where the file system can become an application itself, and then used to accelerate the speed of prototype development. In particular the above mentioned mechanism may be used as part of the underlying mechanism for a Web API.

In any of the above aspects, the various features may be implemented in hardware, or as software modules running on one or more processors. Features of one aspect may be applied to any of the other aspects.

### Industrial Applicability

This invention is useful in prototype development of web-based applications for example. More widely it can contribute to knowledge management system in the form of a dynamic, federated system for the prototyping of knowledge management applications based on the file system, and complements the expected operation of the file system. In embodiments it becomes possible to react to the creation of new data resources in the file system, and as a result determine any domain constraints that should be applied in the form of file system manipulations.

## Claims

1. A hierarchical data system comprising one or more agents arranged to monitor structural changes to the hierarchical data system, to recognise at least one specific structural change and in response to said specific structural change, to apply one or more manipulations of the hierarchical data system not specified by said structural change.

2. The hierarchical data system according to claim 1 wherein the hierarchical data system defines paths, agents compare structural changes with at least one path template and on finding a match of the structural change with part of a template, apply said one or more manipulations in accordance with the remainder of the template.

3. The hierarchical data system according to claim 1 or 2 wherein the template is contained in a configuration file of the hierarchical data system.

4. The hierarchical data system according to claim 3 wherein the hierarchical data system includes a hierarchical structure of directories.

5. The hierarchical data system according to claim 4 wherein the agents are responsive to a structural change to search the context directory and any ancestor directories for a said configuration file matching the structural change.

6. The hierarchical data system according to claim 5 wherein the agents search the context directory first and if the configuration file is not found, proceed to search progressively higher levels in the hierarchical structure.

7. The hierarchical data system according to claim 4, 5 or 6 wherein the specific structural change comprises a create directory command.

8. The hierarchical data system according to claim 7 wherein the one or more manipulations include creating at least one sub-directory of said directory.

9. The hierarchical data system according to claim 7 or 8 wherein the one or more manipulations include creating at least one file within said directory.

10. The hierarchical data system according to any preceding claim wherein the one or more manipulations enforce domain-specific structures in a file system.

11. The hierarchical data system according to any preceding claim wherein the one or more manipulations constrain data entry into a file system.

12. A method of managing a hierarchical data system comprising:
monitoring structural changes to the hierarchical data system in order to recognise at least one specific structural change; and
in response to recognising the specific structural change, applying one or more manipulations of the hierarchical data system not specified by said structural change.

13. A computer program containing computer-readable instructions which, when executed by a computing apparatus, causes the computing apparatus to perform the method of claim 12.

14. A computer-readable medium on which is stored the computer program according to claim 13.
